(19) Europäisches Patentamt
European Patent Office
Office européen des brevets

(11) **EP 2 895 637 B1**

(12) **EUROPEAN PATENT SPECIFICATION**

(45) Date of publication and mention
of the grant of the patent:
**23.11.2016 Bulletin 2016/47**

(21) Application number: **13740021.4**

(22) Date of filing: **24.07.2013**

(51) Int Cl.:
$C22C\ 38/14^{(2006.01)}$

(86) International application number:
**PCT/EP2013/065643**

(87) International publication number:
**WO 2014/040783 (20.03.2014 Gazette 2014/12)**

(54) **TIC-PARTICLE-REINFORCED HIGH STRENGTH AND LOW DENSITY STEEL PRODUCTS WITH IMPROVED E-MODULUS AND METHOD FOR PRODUCING SAID PRODUCT**

TIC-PARTIKELVERSTÄRKTE HOCHFESTE STAHLPRODUKTE VON GERINGER DICHTE MIT VERBESSERTEM E-MODULUS UND VERFAHREN ZUR HERSTELLUNG DES PRODUKTS

PRODUITS D'ACIER RENFORCÉS DE PARTICULES EN TIC À TRÈS HAUTE RÉSISTANCE ET FAIBLE DENSITÉ AVEC MODULE E AMÉLIORÉ ET PROCÉDÉ DE PRODUCTION DUDIT PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2012 EP 12184461**

(43) Date of publication of application:
**22.07.2015 Bulletin 2015/30**

(73) Proprietor: **Tata Steel Nederland Technology B.V.**
**1951 JZ Velsen-Noord (NL)**

(72) Inventor: **LIU, Cheng**
**1970 CA IJmuiden (NL)**

(74) Representative: **Bodin, Andre**
**Tata Steel Nederland Technology B.V.**
**Group Intellectual Property Services**
**P.O. Box 10000 - 3G.37**
**1970 CA IJmuiden (NL)**

(56) References cited:
**JP-A- 2002 105 588    JP-A- 2004 035 948**

• **DOGAN O N ET AL: "TIC-REINFORCED CAST CR STEELS", JOURNAL OF MATERIALS ENGINEERING AND PERFORMANCE, ASM INTERNATIONAL, MATERIALS PARK, OH, US, vol. 15, no. 3, 1 June 2006 (2006-06-01), pages 320-327, XP001243723, ISSN: 1059-9495, DOI: 10.1361/105994906X108585**

• **DAS K ET AL: "A REVIEW ON THE VARIOUS SYNTHESIS ROUTES OF TIC REINFORCED FERROUS BASED COMPOSITES", JOURNAL OF MATERIALS SCIENCE, SPRINGER NETHERLANDS, NL, vol. 37, no. 18, 15 September 2002 (2002-09-15), pages 3881-3892, XP002529651, ISSN: 0022-2461, DOI: 10.1023/A:1019699205003**

**Description**

The invention relates to high strength and low density steel with increased E-modulus and to a method for producing said steel.

In the automotive industry, where lighter vehicles and safety are of constant concern, steel with a higher E-modulus allows the use of thinner gauge parts which still have the stiffness of thicker and thus heavier parts. Also in other types of applications such as in yellow goods, construction and engineering etc. the combination of high E-modulus, low density, and high strength is an interesting combination of properties. A known way to increase the modulus of elasticity and reduce the density of steel is by incorporating ceramic particles of different natures, such as carbides, nitrides, oxides or borides. These particles have a much higher elastic modulus, ranging from about 300 to 550 GPa, than that of the steel base which has an E-modulus around 210 GPa. One way of including ceramic particles uniformly distributed in a matrix of steel is by means of powder metallurgy.

Despite improved mechanical properties in comparison with conventional steels containing no dispersion of ceramic particles, this type of method like powder metallurgy has problems. Reactions of the metal powders are difficult to prevent because of the high surface area of the metal powders. Even after compacting and sintering, there may be residual porosity that may play a role in inducing fracture during cyclic loading. Uniform distribution of the particles in the matrix is difficult to achieve. Moreover the chemical composition of interfaces matrix/particle, and therefore their cohesion is difficult to control because of the surface contamination of the powders before sintering. In addition, the cost of the process like power metallurgy is very high. This type of process is therefore potentially suitable for production in small quantities but not for economic production on the scale required for the automotive and construction industry.

In EP1897963 a steel is proposed based on the formation of large quantities of titaniumdiboride particles ($TiB_2$). It describes steel comprising 2.5 to 7.5% titanium and about 0.8 to about 4% boron. The result of these additions is that large numbers of eutectic $TiB_2$-precipitates are formed in the steel matrix and these particles leads to increase of the E-modulus and decrease of the density of the steel. A disadvantage of this steel type is that it is very difficult to produce the $TiB_2$-precipitates as fine eutectic precipitates. Because of addition of large amount of B, the cost of this type steel is quite high. A similar solution is chosen in JP2007-051341 where the mandatory presence of large amounts of titanium and vanadium is complemented by a mandatory presence of large amounts of chromium to produce and stabilise the formation of $V_3B_4$ making the costs of the alloy very high.

JP 2004 035948 discloses a steel having a high Young's Modulus by casting a steel containing borides and carbonitrides dispersed in the matrix.

It is an object of this invention to provide a steel product with a higher E-modulus than conventional steels.

It is also an object of this invention to provide a steel product that is more economic than steel with $TiB_2$ or vanadium containing borides

It is also an object of this invention to provide a method of mass producing the steel product of the invention in an economical way.

One or more of these objects are reached by a steel comprising in wt. %

- $1.0 \leq C < 3.0$
- $4.0 \leq Ti < 12.0$
- $0.05 \leq Mn < 3.0$
- $0.005 \leq Al\_sol < 0.5$
- $0 \leq Cr < 1.0$
- $0 \leq Si < 1.0$
- $0 \leq N < 1.0$
- $0 \leq Cu < 1.0$
- $0 \leq Mo < 0.5$
- $0 \leq W < 0.5$
- $0 \leq Nb < 0.5$
- $0 \leq V < 0.5$
- $0 \leq S < 0.030$
- $0 \leq P < 0.1$
- $0 \leq N < 0.04$
- $0 \leq B < 1.0$
- remainder iron and inevitable impurities;

wherein the structure of the steel comprises at least 5 wt% of TiC-particles wherein $-0.1 <= C-((12/48)*(Ti-2.22*B))-((12/184)*W)-((12/51)*V)-((12/93)*Nb) <=0.3$

All compositional percentages are in weight percent (wt.%) unless otherwise indicated. The unavoidable impurities are elements unavoidably contained in the steel due to circumstances such as raw materials, manufacturing facilities, etc.

The at least 5 wt% of TiC-particles are predominantly formed during solidification of the cast as an eutectic reaction.

**Carbon** is an important element for forming TiC-particles. Together with Ti amount of carbon determines the volume fraction of TiC-particles. Below the lower end of the inventive range the contribution of TiC-particles to the E-modulus is insufficient. On the other hand, if the content of carbon exceeds 3.0%, the volume fraction of TiC-particles is too high which has a negative impact on ductility and workability.

**Titanium** is an important element for forming TiC-particles. TiC-particles raise the E-modulus of the steel and reduce the density of the steel. Below the lower end of the inventive range the contribution of the TiC-particles to the E-modulus is insufficient. The Titanium content is at least 4.0%. If the titanium content exceeds 12% the volume fraction of TiC-particles is too high which has a negative impact on ductility and workability.

**Boron** can be optionally added. Boron forms $TiB_2$-particles raising the E-modulus of the steel and reducing the density of the steel.

**Manganese** contributes to the strengthening of the matrix by solid solution and increasing quenching-hardening-ability of steels. Manganese is also effective in binding sulphur thereby reducing the risk of hot-cracking during hot rolling. However the amount of Mn above 3% increases the risk of segregation and band formation to an unacceptable level. The minimum manganese content is 0.05%.

**Chromium** is an element effective in increasing quenching-hardening-ability of steel and the strength of the matrix. Too high Cr increases the cost of steel and an excessive addition of Cr leads to precipitate (Fe, Cr)-borides which is not desirable in the context of this invention. The chromium content is therefore preferably below 2%. When present as an alloying element then a suitable minimum amount is 0.05% and preferably 0.1%.

**Aluminium** is added mainly for deoxidation. An amount of about or higher 0.005% is effective in the deoxidation of the melt. On the other hand, high Al-contents result in deterioration in ductility and castability due to the formation of harmful coarse alumina inclusions. Therefore the maximum content should not exceed 0.5%. The aluminium content in the steel is expressed as Al_sol (acid soluble), meaning that the aluminium is not bound to oxygen. The killing of the steel during steelmaking requires the addition of a deoxidant, usually aluminium and sometimes silicon, to bind the oxygen into alumina.

**Silicon** is an element increasing strength of steel. However, a Si-content of more than 1% will negatively affect surface quality of steel and galvanisability of steel products. Therefore the Si-content should be preferably below 1.0%.

**Nitrogen** is an impurity element that consumes Ti to form TiN and should be kept as low as possible. Although the maximum allowable nitrogen content is 0.040% (400 ppm), the nitrogen should preferably be controlled below 0.020%.

**Tungsten** is an element having the same function as Ti for forming (TiW)C. Presence of W replaces part of Ti in TiC and increases the E-modulus of TiC-particles. However addition of too high W is not economic and should therefore be limited to 0.5%. When present as an alloying element then a suitable minimum amount is 0.05% and preferably 0.1%.

**Niobium** has a similar working as Ti and can replace part of Ti in TiC. However, Nb is much more costly than Ti and should therefore be limited to 0.5%. When present as an alloying element then a suitable minimum amount is 0.03% and preferably 0.05%.

**Vanadium** has a similar working as Ti and can replace part of Ti in TiC. However, V is much more costly than Ti and should therefore be limited to 0.5%. When present as an alloying element then a suitable minimum amount is 0.05% and preferably 0.1%.

If **Sulphur** is added in amounts exceeding 0.030%, then the risk of MnS formation becomes too great. MnS is known to adversely affect hot and cold formability.

**Phosphorus** is a very effective element for increasing the strength. However, phosphorus segregates at the grain boundaries. To maintain sufficient hot ductility and avoid hot-cracking during solidification and welding the amount should not exceed 0.1%, and preferably not exceed 0.04%.

Optionally, **nickel, copper** and **molybdenum** can be added which increase the strength of the steel matrix and increasing quenching-hardening-ability of steel matrix. For economic reasons, the additions should be limited to 1%, 1% and 0.5% by weight respectively.

The volume fraction of TiC is measured by XRD, Optical Microscopy or SEM and can then be converted into wt% using the density of TiC.

In an embodiment the E-modulus of the steel is at least 230 GPa, preferably at least 235 GPa. This is achieved by producing more TiC-particles in the steel matrix.

In an embodiment the structure of the steel comprises at least 7 wt.% TiC., more preferably at least 10 wt.% TiC.

In an embodiment the precipitates have an average size of below 10 μm. preferably the average size is below 5 μm.

According to a second aspect, a method is provided for producing the steel as claimed in any one of claims 1 to 4. A big advantage is that according to this method the steel according to the invention can be mass produced using conventional steel making equipment. Preferably the steel melt from which the steel according to the invention is made by using Ferro-alloys, and not by powder metallurgy. This makes the steel much easier to produce in mass, and thereby more economically.

The hot rolled steel may subsequently be subjected to cold rolling to further reduce the gauge of the material and annealed at the temperature suitable to recrystallise the grain structure. The steel (cold-rolled or hot-rolled) may also be provided with a metallic coating to increase its corrosion resistance. This metallic coating preferably is a zinc or zinc alloy coating, and wherein the coating is applied by electrocoating or hot-dipping. The alloying elements in the zinc alloy coating may be aluminium, magnesium or other elements. An example of a suitable coating is the Magizinc® coating developed by Tata Steel.

According to a third aspect the steel according to the invention is used in static constructions such as sections, bridges or bridge parts, buildings, in vehicles such as cars, yellow goods, trucks, or aerospace applications. In automotive applications such as vehicles this type of steel can be applied for example in brakes, suspension components, shock mounts, roof bows, and vehicle floors. In aerospace applications one of the possible applications are gears and bearings etc., in construction the structural steels for sections. For yellow goods the possible applications are e.g. boom and bucket arm structures on backhoes and excavators. The steel may be (e.g.) in strip form, sheet, section or rod.

The invention is now further explained by means of the following, non-limitative example.

Three melts were made from very low carbon steel scraps, graphite, and Ferro-Ti alloy with addition of relevant alloying elements. The melts were cast into ingots with dimension of 100x100x350mm. The chemical compositions of the casts are given in Table 1.

Table 1. Chemical composition of casts, wt. % unless otherwise specified.

| Steel | C | Ti | Mn | Al | N (ppm) |
|-------|------|-------|------|------|---------|
| 1 | 1.35 | 6.1 | 0.21 | 0.42 | 50 |
| 2 | 0.05 | 0.005 | 0.2 | 0.1 | 50 |

The ingots was reheated up to 1200°C and soaked for 1 hour and then hot rolled. The hot rolling from 100mm gauge down to 4mm gauge was performed. Finishing Rolling temperature was higher than 870°C. After hot rolling, hot rolled plates were coiled at 700°C.

The percentage of TiC (wt.%) and the E-modulus are given in Table 2.

**Table 2**. TiC (in wt.%) and E modulus for experimental steels

| Steel | TiC (wt.%) | E (GPa) | Density (kg/m3) |
|-------|------------|---------|-----------------|
| 1 | 7.4 | 232 | 7450 |
| 2 | <0.1% | 205 | 7800 |

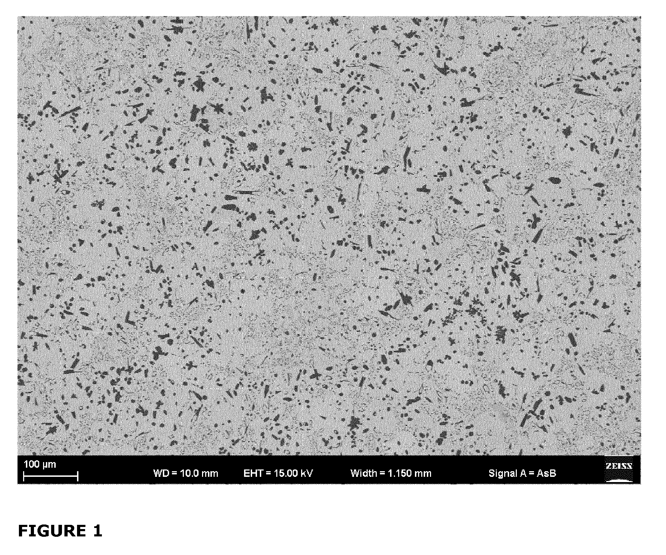

Figure 1 shows a micrograph of the structure.

**Claims**

1. Steel having a chemical composition consisting of

    • $1.0 \leq C < 3.0$
    • $4.0 \leq Ti < 12.0$
    • $0.05 \leq Mn < 3.0$
    • $0.005 \leq Al\_sol < 0.5$
    • $0 \leq Cr < 1.0$
    • $0 \leq Si < 1.0$
    • $0 \leq Ni < 1.0$
    • $0 \leq Cu < 1.0$
    • $0 \leq Mo < 0.5$
    • $0 \leq W < 0.5$
    • $0 \leq Nb < 0.5$
    • $0 \leq V < 0.5$

- $0 \leq S < 0.030$
- $0 \leq P < 0.1$
- $0 \leq N < 0.04$
- $0 \leq B < 1.0$
- remainder iron and inevitable impurities;

wherein the steel comprises at least 5 wt% of TiC-particles and wherein $-0.1 <= C-((12/48)*(Ti-2.22*B))-((12/184)*W)-((12/51)*V)-((12/93)*Nb) <= 0.3$.

2. Steel according to claim 1 wherein the E-modulus is at least 225GPa, preferably at least 230GPa.

3. Steel according to any one of claims 1 to 2 wherein the structure of the steel comprises at least 7 wt% of TiC, preferably at least 10 wt%.

4. Steel according to any one of claims 1 to 3 wherein the particles have an average size of below 10 $\mu$m, preferably below 5 $\mu$m.

5. Method for producing the steel of any one of claims 1 to 4 comprising the steps of:

    a. providing a steel melt having a composition

    - $1.0 \leq C < 3.0$
    - $4.0 \leq Ti < 12.0$
    - $0.05 \leq Mn < 3.0$
    - $0.005 \leq Al\_sol < 0.5$
    - $0 \leq Cr < 1.0$
    - $0 \leq Si < 1.0$
    - $0 \leq Ni < 1.0$
    - $0 \leq Cu < 1.0$
    - $0 \leq Mo < 0.5$
    - $0 \leq W < 0.5$
    - $0 \leq Nb < 0.5$
    - $0 \leq V < 0.5$
    - $0 \leq S < 0.030$
    - $0 \leq P < 0.1$
    - $0 \leq N < 0.04$
    - $0 \leq B < 1.0$
    - remainder iron and inevitable impurities;

    wherein the structure of the steel comprises at least 5 wt% of TiC-particles and wherein

    $$-0.1 <= C-((12/48)*(Ti-2.22*B))-((12/184)*W)-((12/51)*V)-((12/93)*Nb) <= 0.3.$$

    b. casting the melt into a suitable starting material for hot rolling by casting an ingot or bloom or by casting a slab, rod or thin slab, or by casting a strip;
    c. heating, reheating or homogenising the ingot, bloom, slab, rod or strip before hot rolling with a controlled heating rate so as to avoid decohesion between the matrix and the TiC-particles;
    d. hot rolling the starting material to the finish hot rolling dimensions;

    wherein the finished hot rolled steel comprises at least 5 wt% of TiC-particles,

6. Method according to claim 5 wherein the hot rolling temperature is above $Ar_3$ and or the coiling temperature after hot rolling is between 500 and 750°C.

7. Method according to any of claims 5 to 6 wherein the steel melt is produced by using Ferro-alloys.

8. Method according to any of claims 5 to 7 wherein the hot rolled steel is subsequently subjected to cold rolling to further reduce the gauge of the material and annealed at the temperature suitable to recrystallise the grain structure.

9. Method according to any one of claims 5 to 8 wherein the steel is provided with a metallic coating to increase corrosion resistance.

10. Method according to claim 9 wherein the metallic coating is a zinc or zinc alloy coating, and wherein the coating is applied by electrocoating or hot-dipping

11. Steel part produced from the steel according to any one of claim 1 to 4 for use in static constructions, vehicles such as cars, yellow goods, trucks, aerospace applications and other engineering applications.

**Patentansprüche**

1. Stahl, aufweisend eine chemische Zusammensetzung, bestehend aus:

   • $1,0 \leq C < 3,0$
   • $4,0 \leq Ti < 12,0$
   • $0,05 \leq Mn < 3,0$
   • $0,005 < Al\_gel < 0,5$
   • $0 \leq Cr < 1,0$
   • $0 \leq Si < 1,0$
   • $0 \leq Ni < 1,0$
   • $0 \leq Cu < 1,0$
   • $0 \leq Mo < 0,5$
   • $0 \leq W < 0,5$
   • $0 \leq Nb < 0,5$
   • $0 \leq V < 0,5$
   • $0 \leq S < 0,030$
   • $0 < P < 0,1$
   • $0 \leq N < 0,04$
   • $0 \leq B < 1,0$
   • Rest aus Eisen und unvermeidbaren Verunreinigungen;

   wobei der Stahl mindestens 5 Gew.-% TiC-Teilchen umfasst und wobei

   $$-0,1 <= C-((12/48)*(Ti-2,22*B))-((12/184)*W)-((12/51)*V)-((12/93)*Nb) <= 0,3$$

2. Stahl nach Anspruch 1, wobei der E-Modulus mindestens 225 GPa, vorzugsweise mindestens 230 GPa entspricht.

3. Stahl nach einem der Ansprüche 1 bis 2, wobei die Struktur des Stahls mindestens 7 Gew.-% TiC, vorzugsweise mindestens 10 Gew.-% umfasst.

4. Stahl nach einem der Ansprüche 1 bis 3, wobei die Teilchen eine durchschnittliche Größe von weniger als 10 $\mu$m, vorzugsweise weniger als 5 $\mu$m aufweisen.

5. Verfahren zur Herstellung des Stahls nach einem der Ansprüche 1 bis 4, umfassend die folgenden Schritte:

   a. Bereitstellen einer Stahlschmelze, aufweisend eine Zusammensetzung:

   • $1,0 \leq C < 3,0$
   • $4,0 \leq Ti < 12,0$
   • $0,05 \leq Mn < 3,0$
   • $0,005 \leq Al\_gel < 0,5$
   • $0 \leq Cr < 1,0$

- $0 \leq Si < 1,0$
- $0 \leq Ni < 1,0$
- $0 \leq Cu < 1,0$
- $0 \leq Mo < 0,5$
- $0 \leq W < 0,5$
- $0 \leq Nb < 0,5$
- $0 \leq V < 0,5$
- $0 \leq S < 0,030$
- $0 \leq P < 0,1$
- $0 \leq N < 0,04$
- $0 \leq B < 1,0$
- Rest aus Eisen und unvermeidbaren Verunreinigungen;

wobei die Struktur des Stahls mindestens 5 Gew.-% TiC-Teilchen umfasst und wobei

$$-0,1 <= C-((12/48)*(Ti-2,22*B))-((12/184)*W)-((12/51)*V)-((12/93)*Nb) <= 0,3;$$

b. Gießen der Schmelze in ein geeignetes Ausgangsmaterial für das Warmwalzen, indem ein Barren oder Vorblock gegossen wird oder indem eine Bramme, Stange oder Dünnbramme gegossen wird oder indem ein Band gegossen wird;

c. Erwärmen, Nacherwärmen oder Homogenisieren des Barrens, des Vorblocks, der Bramme, der Stange oder des Bands vor dem Warmwalzen mit einer regulierten Erwärmungsgeschwindigkeit, um eine Dekohäsion zwischen der Matrix und den TiC-Teilchen zu vermeiden;

d. Warmwalzen des Ausgangsmaterials zu den fertigen Warmwalzabmessungen; wobei der fertige warmgewalzte Stahl mindestens 5 Gew.-% TiC-Teilchen umfasst.

6. Verfahren nach Anspruch 5, wobei die Warmwalztemperatur über $Ar_3$ liegt und/oder die Wickeltemperatur nach dem Warmwalzen zwischen 500 und 750 °C liegt.

7. Verfahren nach einem der Ansprüche 5 bis 6, wobei die Stahlschmelze unter Verwendung von Eisenlegierungen hergestellt wird.

8. Verfahren nach einem der Ansprüche 5 bis 7, wobei der warmgewalzte Stahl anschließend dem Kaltwalzen unterzogen wird, um die Dicke des Materials weiter zu verringern und bei der Temperatur geglüht wird, die zum Umkristallisieren der Kornstruktur geeignet ist.

9. Verfahren nach einem der Ansprüche 5 bis 8, wobei der Stahl mit einer metallischen Beschichtung ausgestattet ist, um die Korrosionsresistenz zu erhöhen.

10. Verfahren nach Anspruch 9, wobei die metallische Beschichtung eine Zink- oder Zinklegierungsbeschichtung ist und wobei die Beschichtung durch eine Elektrotauchlackierung oder Schmelztauchen aufgebracht wird.

11. Aus dem Stahl nach einem der Ansprüche 1 bis 4 gefertigtes Stahlteil für eine Verwendung in statischen Konstruktionen, Fahrzeugen, wie beispielsweise PKW, gelben Gütern, LKW, Luft- und Raumfahrtanwendungen oder anderen technischen Anwendungen.

**Revendications**

1. Acier présentant une composition chimique comprenant

- $1,0 \leq C < 3,0$
- $4,0 \leq Ti < 12,0$
- $0,05 \leq Mn < 3,0$
- $0,005 \leq Al\_sol < 0,5$
- $0 \leq Cr < 1,0$

- $0 \leq Si < 1{,}0$
- $0 \leq Ni < 1{,}0$
- $0 \leq Cu < 1{,}0$
- $0 \leq Mo < 0{,}5$
- $0 \leq W < 0{,}5$
- $0 \leq Nb < 0{,}5$
- $0 \leq V < 0{,}5$
- $0 \leq S < 0{,}030$
- $0 < P < 0{,}1$
- $0 \leq N < 0{,}04$
- $0 < B < 1{,}0$
- le reste étant composé de fer et des inévitables impuretés ;

où l'acier comprend au moins 5% en poids de particules de TiC et où

$$-0{,}1 <= C-((12/48)* (Ti-2{,}22*B))-((12/184)* W)-((12/51)*V)-((12/93)*Nb) <= 0{,}3$$

2. Acier selon la revendication 1, où le module d'élasticité est d'au moins 225GPa, de préférence d'au moins 230 GPa.

3. Acier selon l'une quelconque des revendications 1 et 2, où la structure de l'acier comprend au moins 7% en poids de TiC, de préférence au moins 10% en poids.

4. Acier selon l'une quelconque des revendications 1 à 3, où les particules ont une taille moyenne inférieure à 10 $\mu$m, de préférence inférieure à 5 $\mu$m.

5. Procédé de fabrication de l'acier selon l'une quelconque des revendications 1 à 4, comprenant les étapes consistant à :

   a. fournir un bain d'acier fondu ayant une composition

   - $1{,}0 \leq C < 3{,}0$
   - $4{,}0 \leq Ti < 12{,}0$
   - $0{,}05 \leq Mn < 3{,}0$
   - $0{,}005 \leq Al\_sol < 0{,}5$
   - $0 \leq Cr < 1{,}0$
   - $0 \leq Si < 1{,}0$
   - $0 \leq Ni < 1{,}0$
   - $0 \leq Cu < 1{,}0$
   - $0 \leq Mo < 0{,}5$
   - $0 \leq W < 0{,}5$
   - $0 \leq Nb < 0{,}5$
   - $0 \leq V < 0{,}5$
   - $0 \leq S < 0{,}030$
   - $0 \leq P < 0{,}1$
   - $0 \leq N < 0{,}04$
   - $0 \leq B < 1{,}0$
   - le reste étant composé de fer et des inévitables impuretés ;

   où la structure de l'acier comprend au moins 5% en poids de particules de TiC et où

   $$-0{,}1 <= C-((12/48)* (Ti-2{,}22*B))-((12/184)*W)-((12/51)*V)-((12/93)*Nb) <= 0{,}3$$

   b. couler la masse fondue dans un matériau de départ approprié pour le laminage à chaud par coulage d'un lingot ou d'une billette ou par coulage d'une brame, tige ou mince brame ou par coulage d'une bande ;
   c. chauffer, réchauffer ou homogénéiser le lingot, la billette, la brame, la tige ou la une bande avant le laminage à chaud avec un taux de chauffage contrôlé de manière à éviter la décohésion entre la matrice et les TiC-particules ;

d. laminer à chaud la matière de départ aux dimensions de laminage à chaud de finition ; où l'acier laminé à chaud fini comprend au moins 5% en poids de particules de TiC.

6. Procédé selon la revendication 5, où la température de laminage à chaud est supérieure à $Ar_3$ et/ou la température de bobinage après laminage à chaud est comprise entre 500 et 750°C.

7. Procédé selon l'une quelconque des revendications 5 et 6, où la masse d'acier fondu est produite à l'aide de ferro-alliages.

8. Procédé selon l'une quelconque des revendications 5 à 7, où l'acier laminé à chaud est ensuite soumis à un laminage à froid pour réduire davantage le calibre du matériau, puis recuit à la température appropriée pour recristalliser la structure du grain.

9. Procédé selon l'une quelconque des revendications 5 à 8, où l'acier est pourvu d'un revêtement métallique pour augmenter la résistance à la corrosion.

10. Procédé selon la revendication 9, où le revêtement métallique est un revêtement de zinc ou d'alliage de zinc, et où le revêtement est appliqué par électrodéposition ou par immersion à chaud.

11. Pièce d'acier produite à partir de l'acier selon l'une quelconque des revendications 1 à 4 pour utilisation dans les constructions statiques, des véhicules tels que les voitures, véhicules de livraison, les camions, des applications aérospatiales et autres applications d'ingénierie.

**FIGURE 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1897963 A
- JP 2007051341 A
- JP 2004035948 A